# FASCICULE DE BREVET EUROPEEN

(11) **EP 2 118 377 B1**
(45) Date de publication et mention de la délivrance du brevet: **28.11.2012**
(21) Numéro de dépôt: 07872383.0
(22) Date de dépôt: 17.12.2007
(51) Int. Cl.: B63G 11/00, B63B 35/50, B64F 1/00, E01F 3/00

(54) **AIRE DE POSÉ POUR ENGINS OU VÉHICULES AÉRIENS COMPRENANT DES ÉLÉMENTS DE RÉCEPTION POUVANT ÊTRE DÉPLOYÉS**
LANDEBEREICH FÜR FLUGGERÄTE UND LUFTFAHRZEUGE MIT AUSKLAPPBAREN AUFNAHMEMITTELN
LANDING AREA FOR AIR MACHINES OR VEHICLES COMPRISING EXTENDABLE RECEPTION MEANS

(30) Priorité: 05.02.2007 FR 0700802
(43) Date de publication de la demande: 18.11.2009
(73) Titulaire: Tripier-Larivaud, Xavier, 92300 Levallois Perret (FR)
(72) Inventeur: Tripier-Larivaud, Xavier, 92300 Levallois Perret (FR)
(74) Mandataire: Metz, Paul
(86) Numéro de dépôt international: PCT/FR2007/002094
(87) Numéro de publication internationale: WO 2008/096052

(56) Documents cités:
- EP-A1- 0 030 849
- WO-A-99/50138
- NL-C2- 1 032 548
- US-B1- 7 152 547

## Description

L'invention se rapporte à une aire de posé pour engins ou véhicules aériens, plus spécifiquement pour aérostats et aérodynes à posé ou décollage vertical ou à faible distance de décollage et d'atterrissage.

Cette aire de posé est prévue pour pouvoir être escamotée sur la surface du support sur lequel elle est montée ou dans un moyen de protection prévu sur ou dans ce support. L'ensemble des éléments de réception formant l'aire de posé de l'invention peut être entièrement escamoté dans le moyen de protection. Plus spécifiquement, cette aire de posé est multifonctionnelle, amovible, modulable et adaptable aux surfaces du support sur lesquelles elle repose, s'accroche et/ou se suspend.

De nos jours, la plupart des aires de posé pour aérostats et aérodynes à décollage vertical ou à atterrissage court, par exemple pour hélicoptères et autogires, possèdent des caractéristiques communes : elles nécessitent de l'espace, à savoir une surface minimum, elles sont fixes et d'un seul tenant, elles reposent sur une surface plane et solide, elles ne sont utilisées qu'à titre d'aire de posé et ne sont pas évolutives.

Face à l'ensemble de ces contraintes, les aires de posé ne peuvent être construites que dans des endroits appropriés, ce qui limite leur nombre et le nombre d'utilisateurs.

Certaines solutions ont été apportées au fil du temps, mais elles ne répondent en général qu'à un besoin spécifique. Par exemple, on connaît diverses aires de posé permettant des atterrissages sur des terrains spéciaux. Ainsi, la demande PCT n° WO 96123691 divulgue une aire de posé permettant des atterrissages sur l'eau et le brevet FR n° 2 667 886 divulgue une aire de posé permettant des atterrissages sur des sols meubles. De même, des solutions ont été apportées au niveau de la construction de l'aire de posé. Ainsi, le brevet FR n° 2 792 955 et le brevet EP n° 0 648 898 divulguent des aires de posé temporaires démontables, tandis que le brevet FR n° 2 636 915 divulgue une aire de posé transportable, que la demande PCT n° WO 92/12894 divulgue une aire de posé extensible et que les brevets EP n° 0 030 849, et EP n° 0 497 646 divulguent le posé et l'hébergement d'un aérodyne dans un caisson étanche. Les solutions divulguées dans ces documents ne permettent en général de répondre qu'à une seule problématique, tout en ne permettant qu'une seule utilisation de l'aire de posé.

La demande de brevet européenne n° EP 0030849 au nom de ISRAEL AIRCRAFT divulgue une structure d'atterrissage et de hangar pour un véhicule aérien, par exemple pour un hélicoptère. Cette structure qui peut être fixée en particulier sur le pont d'un navire, comporte une enceinte comprenant un cadre, des parois latérales et une pluralité de panneaux portés sur le dessus des parois latérales et pouvant coulisser horizontalement vers une position intérieure rétractée fermant l'enceinte ou dans une position externe déployée ouvrant l'enceinte et se prolongeant latéralement au-delà des parois latérales. Une plate-forme élévatrice est mobile verticalement entre une position inférieure dans l'enceinte et une position supérieure horizontalement alignée avec le plan des panneaux. Quand la plate-forme élévatrice est dans sa position supérieure, elle constitue, ainsi que certains des panneaux dans leur position externe déployée, une aire de posé agrandie pour l'atterrissage ou le décollage d'un hélicoptère; et lorsque la plate-forme élévatrice est dans sa position intérieure rétractée elle permet à l'hélicoptère qui est posé d'être abrité dans l'enceinte avec les panneaux coulissants dans leur position intérieure fermant l'enceinte et fournissant une aire de posé plus petite pour un autre hélicoptère, si nécessaire. Néanmoins, cette structure est particulièrement encombrante et inamovible, et n'est pas du tout prévue pour être entièrement logée dans une protection.

La demande américaine n° US 7,152,547 au nom de HOVLAND VIDAR décrit un système de compensation des mouvements d'une plate-forme pour hélicoptère pour un navire. Un contrôleur est en communication fonctionnelle avec un détecteur d'assiette et est prévu pour solliciter au moins un actionneur pour maintenir sensiblement constante l'assiette de la plate-forme pour hélicoptère afin de compenser les mouvements du navire.

La demande américaine n° US 4,883,241 au nom de SNEAD EDWIN expose une plate-forme pour hélicoptère prévue pour être utilisée sur des trains. Cette plate-forme comprend une surface plane présentant une aire adaptée à la réception des skis ou patins d'un hélicoptère, une pluralité d'éléments structurels reliés à la surface plane et au châssis d'un wagon ferroviaire. Une partie extensible de cette surface plane peut être actionnée sélectivement pour augmenter la surface totale de la surface plane. Cependant, cette structure est très encombrante et inamovible, et n'est pas du tout prévue pour être entièrement logée dans une protection.

L'invention permet de remédier à ces inconvénients, et de proposer un ensemble de solutions adaptées. En effet, l'aire de posé selon l'invention s'adapte aux caractéristiques de l'endroit où on souhaite l'installer, et aux différentes fonctions que son utilisateur souhaite lui donner. Ainsi, l'aire de posé selon l'invention peut s'installer sur n'importe quelle surface, elle peut prendre la taille et la forme que l'on souhaite, elle est amovible, modulable et adaptable, et enfin étant multifonctionnelle et évolutive, elle s'adapte aux désirs de ses utilisateurs ainsi qu'aux dernières évolutions techniques, technologiques, aux nouvelles utilisations et aux nouvelles tendances. Enfin, l'ensemble des éléments de réception formant l'aire de posé de l'invention peut être entièrement escamoté dans un moyen de protection.

Dans ce but, l'aire de posé selon l'invention comprend au moins deux éléments de réception prévus pour s'associer afin de former une surface de posé de plus grande taille lorsqu'ils sont déployés ; au moins un moyen de protection dans lequel l'ensemble des éléments de réception de l'aire de posé de l'invention peut être entièrement escamoté ; au moins un moyen technique mécanique d'escamotage pour au moins un élément de réception, lequel moyen réalise les mouvements d'au moins un des éléments de réception pour l'escamoter de la surface du support sur laquelle l'aire de posé est montée et le loger dans le moyen de protection ; et au moins un moyen technique mécanique d'extraction et/ou de déploiement pour au moins un élément de réception, ce moyen d'extraction réalisant les mouvements d'au moins un des éléments de réception pour le sortir hors du moyen de protection dans lequel il se trouve à l'état escamoté et pour le déployer en position d'utilisation.

Enfin, l'aire selon l'invention peut comprendre un plancher technique; de préférence d'une conception modulaire et interchangeable, ce qui permet de moduler son utilisation. Ainsi, ce plancher technique peut former une surface de posé, mais également toute autre surface, comme par exemple une surface de réception pour des invités, une structure pour bain de soleil, une surface de stockage, etc. En outre, les marchandises stockées sur la surface de posé de l'aire selon l'invention utilisée comme surface de stockage peuvent être préférentiellement sécurisées grâce à tout système d'arrimage, par exemple au moyen de logements, d'anneaux, de sangles et/ou analogues prévus sur l'aire.

Par commodité, dans la suite de ce document, par surface de posé nous entendrons toute surface formée par la partie supérieure des éléments de réception, qu'il s'agisse d'une surface de posé, d'une surface de réception pour des invités, d'une structure pour bain de soleil, d'une surface de stockage ou de toute autre surface.

Pour des raisons pratiques, l'aire selon l'invention peut comporter un moyen permettant de faire pivoter sa surface de posé à la manière d'un plateau pivotant pour permettre par exemple aux aérodynes et aérostats de décoller face au vent.

Un système d'amortissement, par exemple sous la forme de blocs antivibratoires, est préférentiellement prévu pour l'aire de posé selon l'invention afin de la rendre plus sûre au décollage et à l'atterrissage.

Pour une plus grande stabilité, en particulier sur une surface de support non stable ou mouvante sur laquelle l'aire selon l'invention est montée, comme par exemple sur un navire, l'aire de posé peut être équipée de tout système de compensation des mouvements de la surface de support. Ainsi, on peut par exemple prévoir des vérins hydrauliques commandés pour éviter le tangage et/ou le roulis, des amortisseurs, des systèmes antivibratoires ou tout autres moyens similaires pour maintenir l'aire sensiblement horizontale.

Selon un mode de réalisation préféré, l'aire de posé selon l'invention et les éléments de réception peuvent être escamotés, puis extraits hors d'un éventuel logement et déployés afin de composer une surface de posé. Ainsi, l'aire de posé peut être escamotée sur la surface du support sur lequel elle repose, se suspend et/ou s'accroche ou dans un moyen de protection prévu sur ou dans ce support, tandis que les éléments de réception de l'aire de posé selon l'invention peuvent être escamotés, par exemple en étant repliés à la manière des ailes d'un papillon, en accordéon ou de toute autre manière adaptée afin de présenter un encombrement minimal sur la surface du support sur lequel l'aire de posé est montée ou dans un moyen de protection prévu sur ou dans ce support.

Les avantages d'un dispositif pouvant être escamoté sont nombreux, qu'il s'agisse d'une aire de posé ou d'un élément de réception, notamment en ce qu'il est protégé de l'extérieur et que lui-même n'interfère qu'un minimum avec son environnement. Ainsi, un dispositif escamoté présente un encombrement minimal, ce qui diminue son impact visuel, permet un gain de place, réduit sa prise au vent et diminue la gêne occasionnée pour la circulation et les manoeuvres des utilisateurs qui peuvent être source de danger. Un dispositif escamoté est moins susceptible d'être heurté et abîmé, et il peut être rangé dans un moyen de protection tel qu'un logement encastré, sous un capot ou dans une housse protectrice afin de le protéger de l'extérieur. En effet, outre les agressions extérieures naturelles, telles que celles dues aux écarts de température, la pluie, la neige, le givre, l'air salin, le sable, la poussière, les chutes d'objets, les salissures, les chocs, la foudre etc., l'aire de posé et/ou ses éléments de réception peuvent être exposés à des agressions provenant de l'endroit où ils se trouvent, tels que de l'eau, de l'air, la pression, des températures hautes ou basses, des ondes, une haute tension, etc. Un dispositif rangé dans son moyen de protection peut également présenter une fonction supplémentaire, telle que celles de servir de surface de stockage ou de structure pour bain de soleil, puis servir pour le posé d'aérodynes à décollage vertical ou à atterrissage court et aérostats une fois déployé. De plus, un dispositif pouvant être escamoté peut également facilement être démonté et/ou enlevé, par exemple dans le but d'être réparé, d'être remplacé par un nouveau modèle et/ou pour lui ajouter de nouvelles fonctionnalités.

En outre, le fait que l'aire de posé puisse être rangée permet de l'installer n'importe où, y compris dans des endroits non appropriés, par exemple de petite taille, de forme complexe, en matériaux inadaptés et/ou présentant des structures inappropriées.

Enfin, le rangement des éléments de réception a pour avantage de maximiser la surface de réception en augmentant le nombre d'éléments de réception et/ou les techniques et outils de déploiement, et également de pouvoir associer ou dissocier les éléments de réception selon leur utilisation et/ou leur emplacement. Ainsi, par exemple, on peut prévoir un élément de réception plus lâche ou amorti à l'endroit où l'aérodyne ou l'aérostat se pose, solidaire d'un élément de réception plus rigide ou fixe le reliant à la surface de support.

Avantageusement, les éléments de réception escamotés ne font pas saillie hors de l'aire de posé et peuvent également être rangés dans un moyen de protection, par exemple un logement encastré, sous un capot ou dans une housse protectrice, ce dernier pouvant être le même que celui dans lequel l'aire de posé repliée est protégée.

Le fait que l'aire de posé puisse être amovible et transportable présente de nombreux avantages. En effet, ceci permet de l'enlever et de la ranger ailleurs quand on n'en a plus besoin ou que l'on veut récupérer l'espace qu'elle occupait. Ceci permet également de la réparer, de la nettoyer, de la modifier ou de la remplacer par une autre aire de posé plus récente ou présentant plus de fonctionnalités. Le fait que l'aire de posé puisse être amovible et transportable permet également de la faire hiverner dans un endroit moins exposé aux éléments ou aux vols, ainsi que de l'utiliser dans un autre endroit.

L'aire de posé peut par exemple être amovible et transportable au moyen d'un système de liaison automatique par prise, connexion et/ou raccord rapide, permettant d'enlever et de remettre l'aire de posé sans avoir à s'inquiéter des différentes connexions et raccords existants. Ceci peut également être permis grâce à un ensemble de prises apparentes ou non permettant d'enlever l'aire de posé à l'aide de tout système mécanique et/ou manuel, ou grâce à un ensemble de mécanismes facilitant son retrait et sa remise en place et/ou de mouvements naturels, permettant par exemple de faire sortir l'aire de posé sous l'effet de son propre poids.

Selon un mode de réalisation préféré, l'aire de posé selon l'invention et les éléments de réception de celle-ci se déploient sous l'effet d'un ou de plusieurs mécanismes, l'objectif étant d'obtenir au final une surface de réception sensiblement plane et horizontale située à une hauteur adaptée à l'atterrissage d'hélicoptères ou d'aérostats ou à l'utilisation souhaitée.

Le déploiement de l'aire de posé selon l'invention s'effectue préférentiellement aussi bien à la verticale qu'à l'horizontale sur un champ d'action de 360 degrés.

Ce déploiement n'est pas limité en inclinaison, en amplitude ou en dimension. De même, il n'est pas limité par des moyens techniques particuliers, chaque moyen de déploiement de l'aire de posé pouvant être indépendant, multifonctionnel et/ou accouplé à d'autres moyens de déploiement si nécessaire. A chaque étape de ce déploiement, que ces étapes soit uniques ou multiples, l'invention utilise préférentiellement un système de contrôle du déploiement, de freinage du déploiement et/ou de maintien en position de l'aire de posé. De même, l'invention utilise préférentiellement un système de blocage et/ou de sécurité. Dans un mode de réalisation préféré de l'invention, tous ces systèmes sont avantageusement commandés à l'aide de tous moyens nécessaires, par exemple à l'aide d'un tableau de commande, d'une télécommande, etc.

Avant, pendant ou après que l'aire de posé soit déployée, les éléments de réception peuvent être déployés à leur tour afin de s'associer pour composer une surface de posé de plus grande taille. Pour une aire de posé de petite taille, la surface de posé peut être composée de seulement deux éléments de réception. Pour des surfaces plus importantes, le nombre d'éléments peut être supérieur. Deux éléments de réception successifs composant la surface de posé peuvent alors être joints à l'aide de tout système permettant de les solidariser en tout ou partie et d'obtenir une surface sensiblement plane. La surface de posé peut alors se déployer sous diverses formes en utilisant tout système manuel et/ou mécanique adapté. Ainsi, on peut prévoir un moyen technique mécanique de déploiement qui réalise les mouvements d'au moins un élément de réception pour le déployer sous forme de diaphragme, corolle, éventail, parapluie, plateau, rideaux, volets roulants, ou pour l'ouvrir en deux, en trois, en quatre volets ou plus, ces volets pouvant être de tailles identiques et/ou différentes.

Dans le cas d'une surface de posé composée d'éléments télescopiques, articulés, emboîtés, pliés ou analogue, on considèrera ici que ces éléments sont constitués d'autant d'éléments de réception unitaires.

Le déploiement de la surface de posé peut reprendre avantageusement les mêmes caractéristiques que le déploiement de l'aire de posé, à l'aide de tout système analogue.

Pour le déroulement de l'ensemble de ces différents déploiements, on peut utiliser indépendamment et/ou de manière conjointe, tout système manuel et/ou mécanique permettant d'actionner un ou plusieurs dispositifs de déploiement.

D'autres caractéristiques et avantages de l'invention apparaîtront à la lecture de la description détaillée qui va suivre, description faite en référence aux dessins annexés, dans lesquels :
· les figures 1 à 7 sont des vues de profil représentant des exemples d'emplacement d'utilisation d'une aire de posé selon l'invention ;
· la figure 8 est une vue schématique en coupe de profil représentant le principe de fonctionnement d'un exemple d'aire de posé selon l'invention ;
· la figure 9 est une vue de dessus représentant un exemple d'aire de posé selon l'invention ;
vla figure 10 est une vue de profil représentant un exemple d'aire de posé selon l'invention en position repliée sous et montée sur une structure pour bain de soleil situé à l'avant d'un navire de grande taille ;
· la figure 11 est une vue de profil représentant l'aire de posé de la figure 10 en position déployée et montée sur la structure pour bain de soleil ;
· la figure 12 est une vue de dessus représentant un exemple d'aire de posé selon l'invention montée sur une structure pour bain de soleil situé à l'avant d'un navire de grande taille et dont la surface de posé est obtenue en position déployée ;
· la figure 13 est une vue de profil représentant un exemple d'aire de posé selon l'invention en position repliée, suspendue et accrochée sous le pont de l'étage supérieur d'un navire de grande taille ;
· la figure 14 est une vue de profil représentant l'aire de posé de la figure 13 en position partiellement déployée, suspendue et accrochée sous le pont de l'étage supérieur du navire ;
· les figures 15 à 62 représentent divers modes de déploiement de l'aire de posé et de la surface de posé, à raison d'une variante par planche de dessin, les figures impaires étant des vues de profil et les figures paires les vues de dessus correspondantes ;
· les figures 63 à 65 sont des vues de dessus représentant les étapes d'un mode de déploiement préféré pour une aire de posé de l'invention et sa surface de posé ;
· les figures 66 et 67 sont des vues de face représentant les étapes du mode de déploiement préféré des figures 63 à 65 ;
· les figures 68 à 71 sont des vues de profil représentant les étapes du mode de déploiement préféré des figures 63 à 65 ;
· la figure 72 est une vue de dessus représentant un exemple d'aire de posé selon l'invention en position déployée et comportant divers réseaux ; et
· la figure 73 est une vue en coupe et en perspective représentant un exemple d'aire de posé selon l'invention en position partiellement déployée et comportant divers réseaux.

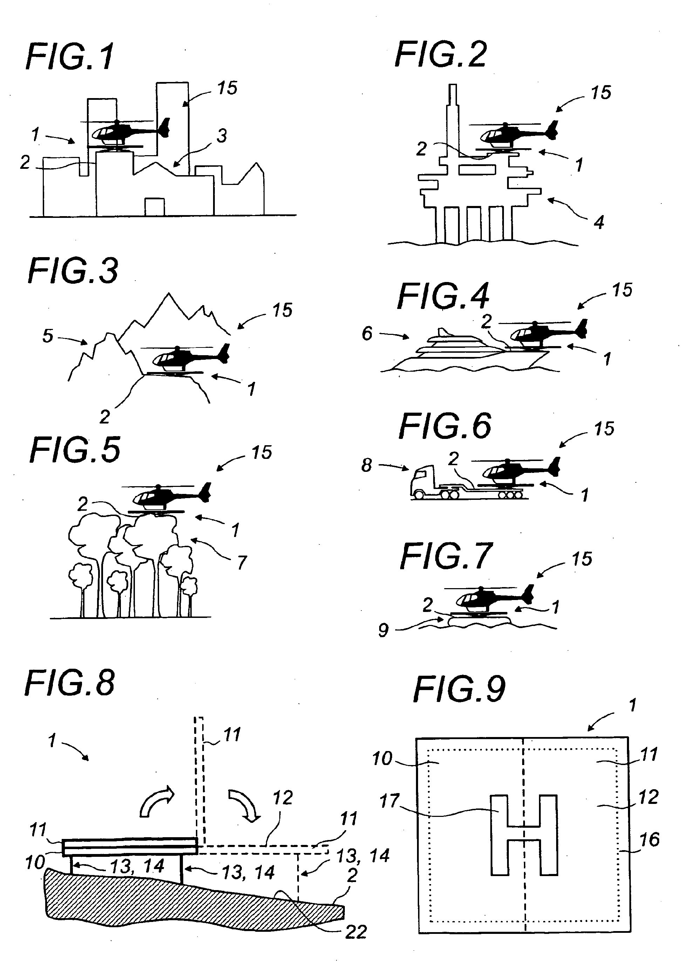

L'aire de posé 1 selon l'invention est prévue pour pouvoir être utilisée sur de nombreux types de support 2 et environnements différents. Sur les figures 1 à 7, on a ainsi représenté des exemples d'utilisation de l'aire de posé 1 de l'invention respectivement sur un bâtiment 3, sur une plate-forme pétrolière 4 de type "offshore", sur un relief montagneux 5, sur un navire 6, dans des arbres 7, sur un véhicule routier 8 et sur une structure 9 flottant sur l'eau. On peut cependant envisager d'adapter l'aire de posé sur ou dans tout autre type de véhicule, de terrain ou de structure naturelle ou artificielle.

Sur la figure 8, on a représenté le principe de fonctionnement d'une aire de posé 1 simplifiée selon l'invention. Cette aire de posé 1 repose sur une surface de support 2 qui n'est ni plane, ni horizontale. Elle comprend deux éléments de réception 10, 11 par exemple en dur prévus pour être déployés afin de former une surface de posé 12 de plus grande taille. L'aire de posé 1 comprend également au moins une armature de fixation et de soutien 13, préférentiellement plusieurs, supportant les éléments de réception 10, 11 une fois ceux-ci déployés afin que la surface de posé 12 soit sensiblement horizontale. Dans une version simplifiée de l'aire de posé 1, ces armatures de fixation et de soutien 13 sont réglables et se présentent préférentiellement sous la forme de béquilles escamotables 14 pouvant comporter des roulettes. Les éléments de réception 10, 11 de l'aire de posé 1 selon l'invention se déplient et se replient aisément à l'aide de charnières et/ou d'axes (non représentés). Comme cela sera vu en détail plus loin, d'autres moyens mécaniques peuvent être prévus afin d'aider au déploiement des éléments de réception 10, 11. Il peut par exemple s'agir de systèmes électriques, magnétiques, aérauliques, pneumatiques, hydrauliques, hydropneumatiques, ou de tout système analogue permettant le déploiement de l'aire de posé 1. Ces systèmes peuvent être indépendants, multifonctionnels et/ou accouplés à d'autres moyens de déploiement.

Sur la figure 9, on a représenté une aire de posé 1 simplifiée selon l'invention vue de dessus, dont les deux éléments de réception 10, 11 sont déployés. Une fois déployée_{;} cette aire ressemble alors à n'importe quelle aire de posé 1 pour aérodynes 15 et aérostats. Sur cette figure, est également représenté un système d'éclairage 16 entourant l'aire et prévu pour baliser la surface de posé 12 lors des atterrissages de nuit ou avec une visibilité réduite, ainsi qu'une lettre H lumineuse 17 prévue pour indiquer le centre de l'aire.

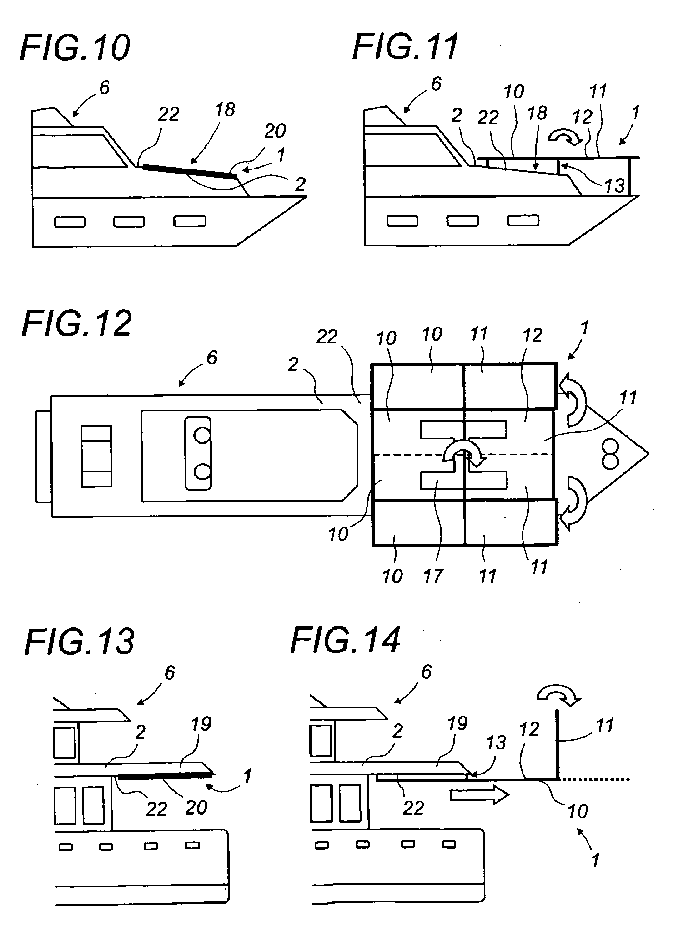

Ce dispositif peut être utile par exemple pour des navires 6 ne possédant pas assez de surface disponible pour installer une aire de posé 1 pour aérodynes et aérostats. Un exemple d'utilisation d'une version simplifiée de l'aire de posé 1 sur un navire 6 est représenté sur les figures 10, 11, 12, 13 et 14.

L'aire de posé 1 selon l'invention peut par exemple être montée à l'avant d'un navire 6 au niveau de la structure pour bain de soleil 18 dans laquelle elle est repliée, comme cela est représenté sur les figures 10 à 12. Cette aire est déployée et positionnée sensiblement à l'horizontale à l'aide d'armatures de fixation et de soutien 13 supportant un premier élément de réception 10, et/ou de tout système mécanique nécessaire. Un deuxième élément de réception 11 est alors déplié pour former une surface de posé 12.

Dans le cas où la surface de posé 12 obtenue est insuffisante, le premier et le deuxième élément de réception 10, 11 peuvent se présenter sous la forme d'éléments doubles articulés repliés l'un sur l'autre et qui peuvent être dépliés encore une fois afin de doubler la taille de la surface de posé 12, comme cela est représenté vu de dessus sur la figure 12. Dans ce cas, l'aire de posé 1 comporte six éléments de réception 10, 11 qui sont repliés sur quatre épaisseurs lorsque l'aire de posé 1 est rangée sous la structure pour bain de soleil 18.

Dans ce mode de réalisatibn, on peut bien évidemment envisager que seul un des deux éléments de réception 10, 11 se présente sous la forme d'éléments doubles articulés repliés l'un sur l'autre, l'aire de posé 1 comportant alors quatre éléments de réception.

L'aire de posé 1 est particulièrement adaptée à un montage à l'avant d'un navire 6 sous une structure pour bain de soleil 18, mais selon la place disponible, elle peut très bien se situer à l'arrière d'un navire 6, sous une autre structure pour bain de soleil 18 ou une structure existante, comme cela est représenté sur les figures 13 et 14.

L'aire de posé 1 peut tout aussi bien s'adapter à une structure existante d'un bâtiment terrestre 3. Le fait de s'accrocher et/ou de se suspendre prend alors tout son sens, comme cela est représenté sur les figures 13 et 14 dans le cas d'un navire 6, bien qu'il puisse s'agir d'un mur, d'un étage, d'un toit de maison, ou de tout support susceptible de recevoir un tel dispositif 1 comme cela est représenté sur les figures 1 à 7.

Sur les figures 13 et 14 qui représentent un autre mode de réalisation, l'aire de posé 1 est suspendue et accrochée sous le pont 19 de l'étage supérieur d'un navire 6. Sur la figure 13, les éléments de réception 10, 11 sont escamotés. Sur la figure 14, l'aire de posé 1 est en cours de déploiement. La première action consiste à faire glisser les deux éléments de réception 10,11 vers l'arrière de la structure. Une fois sortie, l'aire de posé 1 peut alors se déployer une fois encore vers l'arrière. Il est alors encore possible d'augmenter la surface de l'aire de posé 1 en incorporant d'autres éléments de réception dans le processus de déploiement.

Dans un mode de réalisation préféré de l'invention, les éléments de réception 10, 11 de l'aire de posé 1 sont réalisés en matériaux métalliques ou composites, bien qu'ils puissent être réalisés en toute autre matière adaptée. De même, les armatures de fixation et de soutien 13 sont préférentiellement réalisées en matériaux métalliques ou composites, bien qu'elles puissent être réalisées en toute autre matière adaptée.

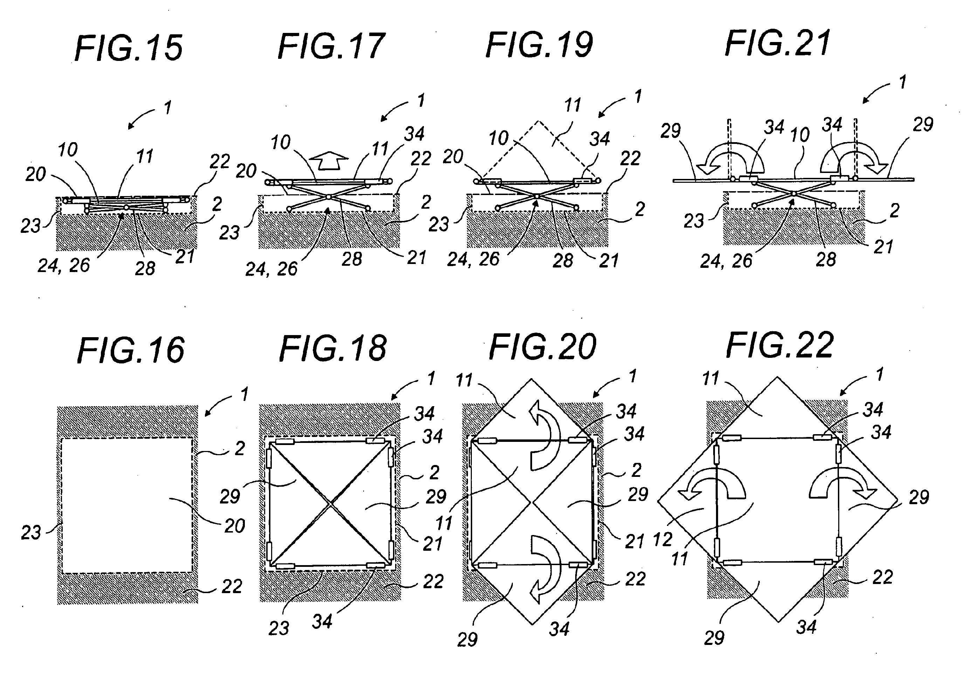

Divers exemples de modes de réalisation préférés permettant de déployer une aire de posé 1 selon l'invention sont représentés sur les figures 15 à 62, à raison d'une variante par planche, les figures impaires étant des vues de profil représentant les étapes successives de déploiement selon une variante et les figures paires étant des vues de dessus correspondantes. Ces modes de déploiement de l'aire de posé 1 et de sa surface de posé 12 permettent avantageusement d'obtenir une surface de posé 12 de grande dimension à partir d'une aire de posé 1 initialement escamotée dans un moyen de protection 20.

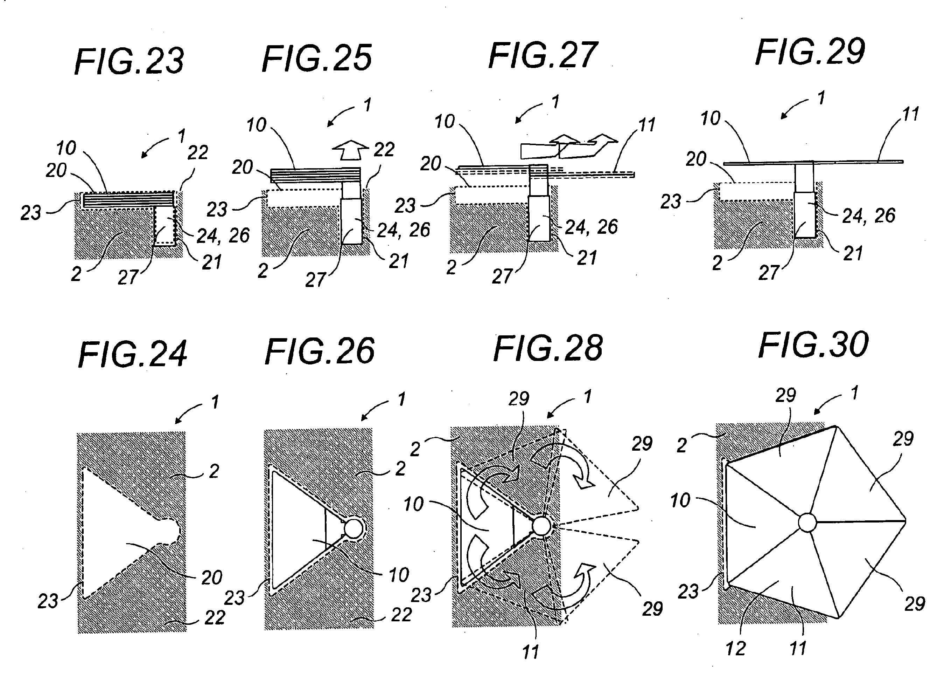

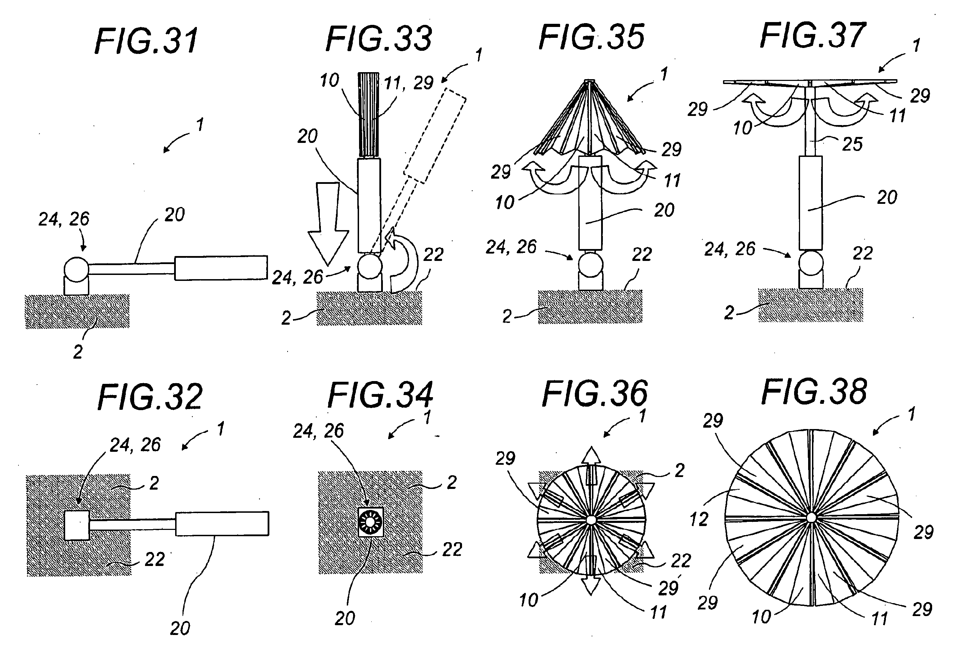

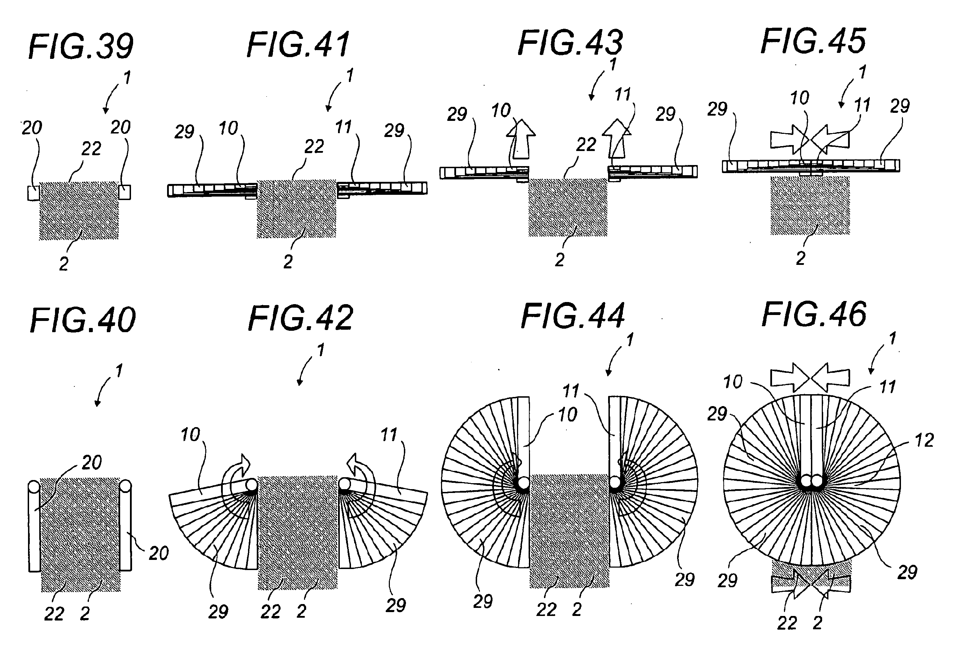

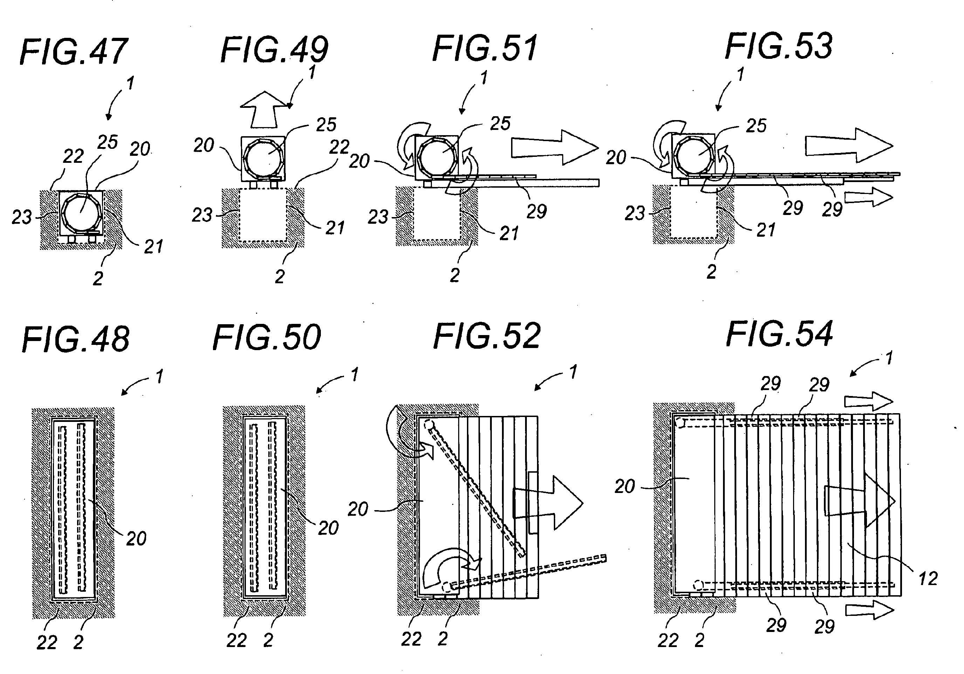

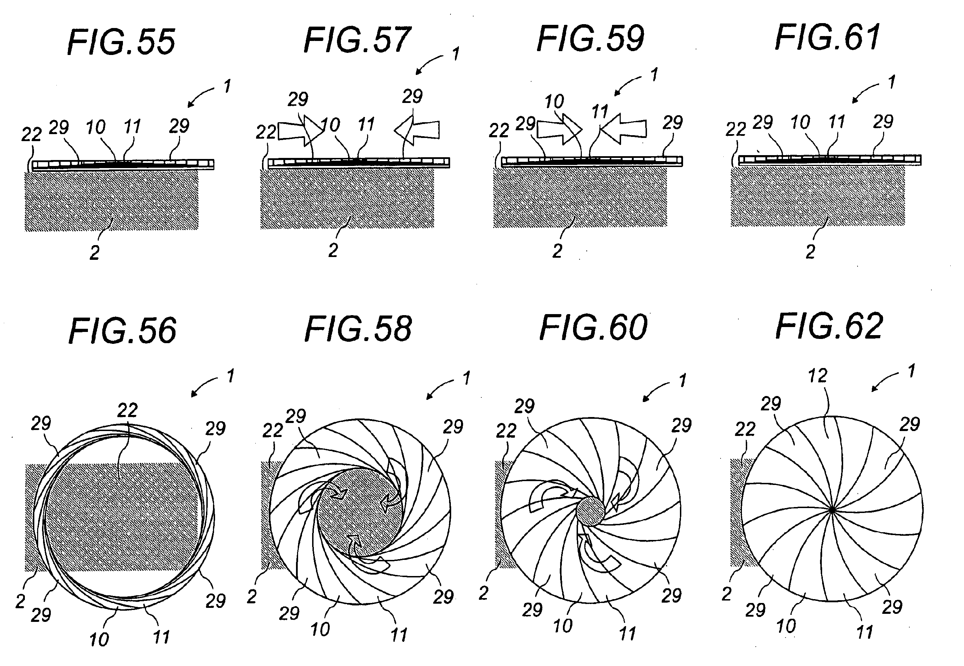

Parmi les différents exemples de modes de réalisation, ceux qui sont représentés sont les suivants :
- déploiement d'une aire de posé 1 à éléments de réception 10, 11 dépliants et rabattables (figures 15 à 22) ;
- déploiement d'une aire de posé 1 à éléments de réception 10, 11 empilables et toumants (figures 23 à 30) ;
- déploiement d'une aire de posé 1 à éléments de réception 10, 11 dépliant à manchon (figures 31 à 38) ;
- déploiement d'une aire de posé 1 à éléments de réception 10, 11 tournants et escamotables (figures 39 à 46) ;
- déploiement d'une aire de posé 1 à élément de réception 10 déroulant et dépliant (figures 47 à 54) ; et
- déploiement d'une aire de posé 1 à éléments de réception 10, 11 à obturation et concentriques (figures 55 à 62).

Ces exemples, bien que nombreux, ne sont pas donnés à titre limitatif. L'homme du métier pourra en imaginer d'autres sans s'écarter du principe général de l'invention. On remarquera néanmoins qu'à chaque fois, l'ensemble des éléments de réception 10, 11 de l'aire de posé de l'invention peut être entièrement escamoté dans un moyen de protection 20.

Ainsi, la plupart des exemples précédemment représentés se rapportent à un déploiement à partir d'un logement horizontal encastré 21, bien qu'on puisse envisager diverses variantes pour le mode de fixation et de rangement de l'aire de posé 1.

De même, le positionnement et l'orientation finale de la surface de posé 12 par rapport à la surface de support 22 sur laquelle l'aire de posé 1 est montée peuvent être librement réalisés à l'aide de moyens rotatifs et/ou de translation.

Dans ces exemples et variantes, l'aire de posé 1 comprend généralement un bâti 23 prévu pour être fixé ou non sur la surface de support 22 sur laquelle l'aire 1 est montée. Ce bâti 23 est préférentiellement logé dans un logement 21 encastré dans le support 2 sur lequel l'aire de posé 1 est montée.

Le bâti 23 comprend préférentiellement les moyens techniques mécaniques d'escamotage 24 de l'aire de posé 1 et ceux de déploiement 25 de l'aire de posé 1, permettant par exemple d'escamoter et d'extraire l'aire de posé 1 et/ou les éléments de réception 10,11 dans, puis hors du moyen de protection 20.

Plus généralement, l'aire de posé 1 comprend au moins un moyen technique mécanique d'escamotage 24 qui réalise les mouvements d'au moins un des éléments de réception 10, 11, de l'aire de posé 1 ou des deux pour l'escamoter de la surface 22 du support 2 sur laquelle l'aire de posé 1 est montée ou dans le moyen de protection 20 dans lequel elle peut être logée. Par escamoter un élément, on entend que le moyen technique mécanique d'escamotage 24 peut servir à dissimuler, replier ou ranger cet élément, qu'il s'agisse de l'aire de posé 1 dans son ensemble ou d'un élément de réception 10, 11.

De même, l'aire de posé 1 comprend au moins un moyen technique mécanique d'extraction 26 et/ou un moyen technique mécanique de déploiement 25 pour au moins un élément de réception 10, 11, pour l'aire de posé 1 ou pour les deux.

Un moyen technique mécanique d'extraction 26 d'un élément réalise les mouvements de ce dernier pour le sortir hors du moyen de protection 20 dans lequel il se trouve à l'état escamoté.

Un moyen technique mécanique de déploiement 25 d'un élément, quant à lui, réalise les mouvements de ce dernier pour le déplier, le translater, le basculer, le dérouler, le déboîter, le dégager ou le séparer d'un autre élément.

Par exemple, le moyen d'extraction 26 d'un élément de réception, permet de sortir ce dernier hors de son moyen de protection 20, tandis que le moyen de déploiement 25 qui lui est associé permet de le déplier, de le translater, de le basculer, de le dérouler, de le déboîter, de le dégager et/ou de le séparer d'un autre élément afin d'obtenir la surface de posé 12 souhaitée.

Une aire de posé 1 considérée dans sa globalité peut, quant à elle, être sortie hors de son moyen de protection 20 et déployée afin d'être dans une position adaptée au posé d'engins ou véhicules aériens 15 lorsque les éléments de réception 10, 11 sont déployés.

Avantageusement, l'extraction et le déploiement peuvent être réalisés par les mêmes moyens techniques mécaniques 25, 26. De même, les moyens mécaniques précédents, qu'ils s'agissent des moyens d'extraction 26 et/ou de déploiement 25, ou de ceux d'escamotage 24 peuvent préférentiellement être les mêmes, mais pas nécessairement.

Ces différents moyens mécaniques 24, 25, 26 peuvent être soit électriques, magnétiques, aérauliques, pneumatiques, hydrauliques, hydropneumatiques ou analogues, être motorisés, être manuels, c'est-à-dire actionnés à la force des bras, ou bien être actionnés par une combinaison de plusieurs de ces moyens.

Les différents moyens d'extraction 26, de déploiement 25 et/ou d'escamotage 24 peuvent par exemple comprendre au moins un bras mécanique, un mât de levage, un élévateur à ciseaux, un vérin, une pompe, une crémaillère, une chaîne, un câble ou analogue. Ils peuvent également comprendre un ou plusieurs dispositifs de guidage du type glissière, rail, porte-à-faux, appui, béquille, tréteau, système suspendu ou basculant, ou analogue.

Les mouvements réalisés par les moyens techniques mécaniques d'escamotage 24 sont par exemple des mouvements de pivotement centré, de pivotement décalé, de translation, ou toute combinaison de ces mouvements, comme par exemple une translation suivie d'un pivotement.

De même, l'aire de posé 1 selon l'invention peut par exemple être montée en saillie sur la surface 22 du support 2 ou encastrée dans celle-ci, de manière horizontale, latérale ou suspendue, ou de toute autre manière adaptée, de sorte qu'à partir desquelles l'ensemble des éléments de réception 10, 11 de l'aire de posé de l'invention peut être entièrement escamoté dans un moyen de protection 20.

Les différents exemples de moyens techniques d'extraction 26 et/ou de déploiement 25, et ceux d'escamotage 24 représentés dans l'ensemble des schémas sont donnés à titre d'exemple et ne sont pas limitatifs l'homme de métier pourra bien entendu les coupler ou les interchanger sans s'écarter du principe général de l'invention.

Comme il est représenté sur les figures 23 à 30, les moyens d'extraction 26, de déploiement 25 et/ou d'escamotage 24 peuvent comprendre par exemple des vérins 27 pneumatiques, hydrauliques ou autres, tandis que comme représenté sur les figures 15 à 22, ils peuvent comprendre par exemple des élévateurs à ciseaux 28 actionnés ou non par des vérins 27 hydrauliques, pneumatiques ou autres, montés sur glissières et/ou tout autre système analogue.

L'aire de posé 1 peut comporter un système d'amortissement, par exemple sous la forme de blocs antivibratoires permettant de rendre l'aire de posé 1 plus sûre au décollage et à l'atterrissage. Les éléments de réception 10, 11 composant la surface de posé 12 sont alors préférentiellement montés sur ce système d'amortissement. Avantageusement, ce système d'amortissement peut comprendre des moyens dynamiques, par exemple à vérins, pouvant être asservis à un système intelligent de détermination en temps réel du tangage, de la gîte et du roulis afin de constituer un système de stabilisation perfectionné pour la surface de posé 12.

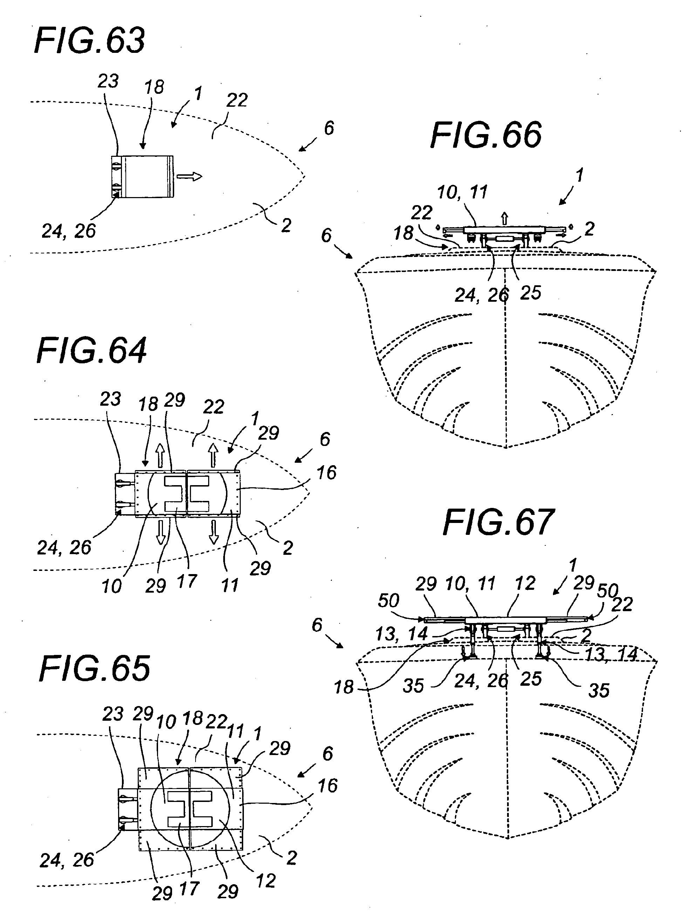

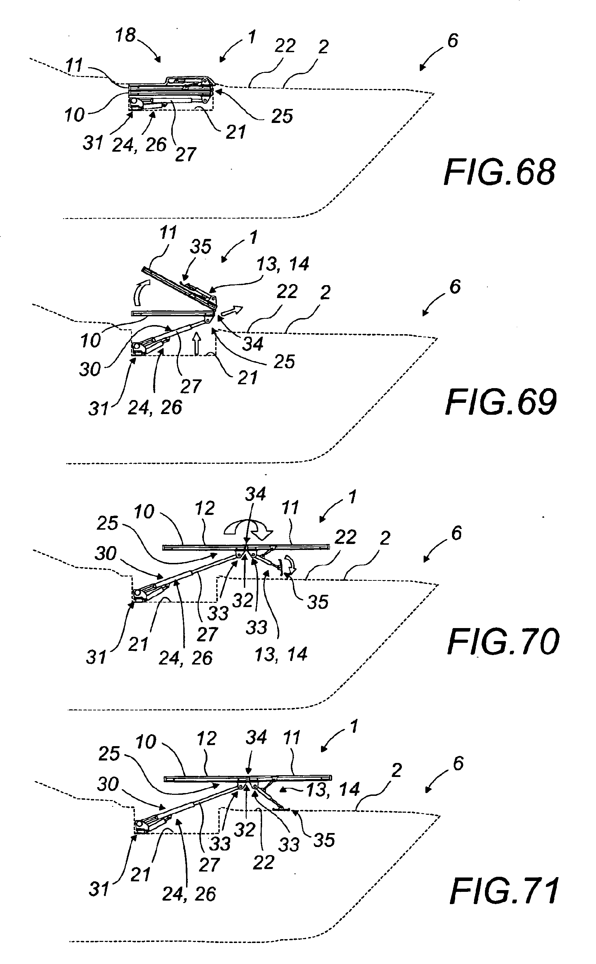

Un exemple d'aire de posé 1 selon un mode de réalisation préféré est représenté sur les figures 63 à 71. Il s'agit d'une aire de posé 1 rangée, repliée et escamotée dans un logement 21 situé sous une structure pour bain de soleil 18 à l'avant d'un navire 6 de grande taille (figure 68).

Dans ce mode de réalisation préféré, la surface de posé 12 comporte deux éléments de réception 10, 11, un élément de réception principal 10 sur lequel toute la surface de posé 12 se replie et se range, et un élément de réception secondaire 11 qui, en position repliée, repose sur l'élément de réception principal 10 et se déploie vers l'avant. La surface de posé 12 comporte également quatre éléments de réception supplémentaires 29 identiques, deux reliés à l'élément de réception principal 10 et deux reliés à l'élément de réception secondaire 11, ces éléments de réception supplémentaires 29 se déployant latéralement hors de l'élément de réception principal 10 et de l'élément de réception secondaire 11.

L'aire de posé 1 selon ce mode de réalisation préféré comprend un système mécanique d'extraction 26 et de déploiement 25 pour l'aire de posé 1 utilisant deux mâts de levage hydrauliques 30, guidés horizontalement et verticalement par des vérins hydrauliques 27. Ce système mécanique d'extraction 26 et de déploiement 25 est prévu pour se déployer vers l'avant du navire 6 afin de positionner l'élément de réception principal 10. Il est alimenté en énergie grâce à des connexions et raccords rapides 31 situés au niveau de sa base. Le système mécanique de déploiement 25 n'est pas fixé directement à l'élément de réception principal 10, mais est solidarisé à un plateau pivotant orientable 32 à l'aide de quatre ancrages solides 33. Ce plateau pivotant 32 est fixé aux éléments de réception par l'intermédiaire d'un système d'amortissement anti-vibratoire. Tout au long de son déploiement, le mécanisme est commandé à l'aide d'un système de sécurité de blocage et de contrôle.

Lors de l'extraction et du déploiement de l'aire de posé 1 et de sa surface de posé 12, ces dernières sont d'abord extraites verticalement hors du moyen de protection 20 à l'aide du système mécanique de déploiement 25 par extension des deux mâts de levage 30 (figures 66 et 69).

Une fois l'élément de réception principal 10 en place, le déploiement du reste de l'aire de posé 1 peut s'effectuer. L'élément de réception secondaire 11 se déploie vers l'avant grâce à un système mécanique de déploiement 25 placé sur les deux éléments de réception 10, 11, et reste solidaire de l'élément de réception principal 10 grâce à un système de fixation par charnières 34 (figures 63 et 69).

A l'aide d'un système de glissières, les quatre éléments de réception supplémentaires 29 se déploient grâce à des systèmes mécaniques 25 incorporés dans les deux éléments principaux de réception 10, 11 afin d'obtenir une surface de posé 12 de plus grande taille (figures 64 à 66).

Avant, pendant ou après que l'aire de posé 1 soit entièrement déployée, la surface de posé 12 est stabilisée à l'aide d'armatures de soutien 13 réglables incorporées dans celle-ci, se déployant et rentrant en contact avec la surface de support 22 (figures 67 et 70). Ces armatures de soutien 13 s'adaptent à la surface de support 22 à l'aide d'éléments « tampons » 35 réalisés dans une matière adaptée pour reposer sur le pont du navire 6 sans en abîmer la surface 22 et pour assurer un appui stable et amorti de l'aire de posé 1 sur celui-ci. Ces armatures de soutien 13 peuvent avantageusement intégrer un système de stabilisation perfectionné tel que susmentionné.

On obtient alors une surface de posé 12 de grande taille, orientable et parfaitement stable, idéalement adaptée au posé d'aérodynes 15 et aérostats (figures 65 et 71).

L'aspect multifonctionnel, évolutif et sécuritaire de l'aire de posé 1 se développe à l'aide d'un grand nombre de systèmes précédemment évoqués.

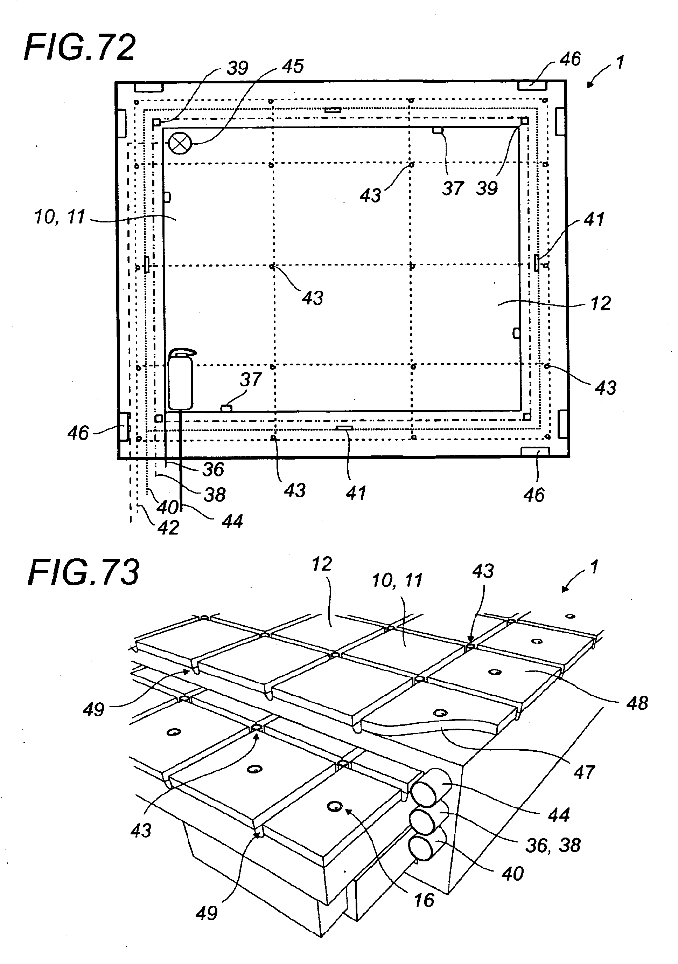

Un exemple de surface de posé 12 selon un mode de réalisation préféré intégrant un grand nombre de ces systèmes est représenté vu de dessus sur la figure 72. Dans un but de commodité, sur cette figure, les démarcations entre les différents éléments de réception 10, 11 ne sont pas représentées. Ainsi, la surface de posé 12 représentée peut être constituée d'un nombre quelconque d'éléments de réception 10, 11, 29. Cette surface de posé 12 comporte avantageusement les moyens suivants :
- un réseau de distribution de liquide sous pression ou non 36 alimentant diverses prises de liquide 37 réparties sur la surface de posé 12 ;
- un réseau de distribution d'air sous pression ou non 38 alimentant diverses prises d'air 39 réparties sur la surface de posé 12 ;
- un réseau de distribution d'électricité 40 alimentant diverses prises d'électricité 41 réparties sur la surface de posé 12 ;
- un réseau anti-incendie 42 alimentant diverses buses anti-incendie 43 quadrillant la surface de posé 12 ;
- un réseau de distribution de carburant 44, par exemple d'essence aviation, de kérosène, de gasoil ou analogue ; et
- une balise de navigation 45 équipée de repères émetteurs visuels, sonores, radio, ou analogues.

Sur la figure 72, sont également représentés de manière non exhaustive des points de fixation 46 qui permettent d'arrimer, d'ajouter, et/ou de connecter tout système permettant par exemple :
- de compléter et/ou de développer la surface de l'aire, en ajoutant des surfaces de posé 12, ou en juxtaposant deux aires de posé 12 ;
- de fixer, d'arrimer, de manière constante ou non tout objet, matériel, pour les transporter, les sécuriser, et/ou les utiliser ou les stocker ;
- de connecter et/ou fixer tout matériel, objet, nécessitant d'être alimenté par l'aire de posé 1 et/ou fixé de manière constante ou non à celle-ci.

Pour des raisons de clarté de la figure, le cordon lumineux 16 délimitant l'aire de posé 1 et la lettre H lumineuse 17 située en son centre ne sont pas représentés, bien qu'ils soient avantageusement présents.

Comme cité précédemment, l'aire de posé 1 selon l'invention est préférentiellement évolutive grâce à un système d'aménagement de l'aire de posé 1. Ainsi, la surface de posé 12 peut également présenter les moyens suivants, bien que ces derniers n'aient pas été représentés :
- des perforations formant des logements, par exemple pour y sertir des montants permettant de former un toit au-dessus de l'aire, ou tout autre moyen permettant de reconfigurer et d'aménager la surface de posé 12 pour lui donner une autre fonction ;
- des fixations formant un dispositif d'arrimage permettant par exemple d'y immobiliser des charges ;
- des moyens de connexion à divers réseaux multimédias, qu'il s'agisse du réseau Internet, télévisuel, audiovisuel, audio, de communication et analogue permettant d'aménager la surface de posé 12 en espace de vie, de loisir, d'information, de travail et/ou de communication ; et
- tout autre moyen dont l'utilisateur souhaite la présence sur la surface de posé 12.

Un autre exemple de surface de posé 12 selon un mode de réalisation préféré de l'invention est également représenté en perspective sur la figure 73. Ce dernier intègre les systèmes et d'aménagements suivants :
- des balises de délimitation, de navigation et de signalisation 16 ;
- un système anti-incendie 42 quadrillant toute la surface de posé 12 et incorporant un système de buses 43 projetant des substances extinctrices ;
- un réseau électrique 40 incorporant des prises en surface pour alimenter tout appareil électrique ;
- un système d'air 38 et un système d'eau 36 sous pression, comprenant des buses de raccordement (37, 39) ;
- une arrivée de carburant sous pression 44 comprenant une ou plusieurs buses de raccordement ;
- un plancher technique modulaire 47 interchangeable antistatique, comprenant un système anti-givre ;
- un revêtement antiglisse 48 ;
- un système d'évacuation des liquides 49, comprenant des rigoles et des gouttières ;
- une connectique spécifique 50 permettant de relier d'autres surfaces de posé ou aires de posé, afin de les relier mécaniquement et d'alimenter les différentes fonctionnalités précédemment citées ;
- des logements d'arrimage pour le stockage ; et
- une lettre H lumineuse 17 signalisant la surface de posé 12 aux aérodynes 15 et aérostats.

Le triple avantage de l'aire de posé 1 selon l'invention est qu'elle ne tient pas beaucoup de place, qu'elle peut s'incorporer dans des éléments existants ou non, et qu'elle permet d'obtenir une surface horizontale importante en des endroits où l'on n'aurait jamais pu l'obtenir.

Cette invention est donc réalisable industriellement, qu'il s'agisse de la production de modèles standards d'aires de posé selon l'invention, ou de modèles haut de gamme et sur mesure. Ainsi, certains secteurs peuvent permettre de réaliser de petites séries comme décrit dans l'exemple du navire représenté sur les figures 63 à 71.

En effet, les constructeurs de navires sont nombreux, et les structures pour bain de soleil sont souvent de taille similaire car réalisées en fonction de la taille d'un homme. Dans le cas de commandes spéciales, où chaque cas rencontré sera le plus souvent unique, l'aire de posé 1 sera du type sur mesure.

De manière évidente, l'invention ne se limite pas au mode de réalisation préférentiel décrit précédemment et aux variantes représentées sur les différentes figures, l'homme du métier pouvant y apporter de nombreuses modifications et imaginer d'autres variantes sans sortir ni de la portée, ni du cadre de l'invention.

## Revendications

1. Aire de posé (1) pour engins ou véhicules aériens, notamment du type à posé vertical ou à faible distance de décollage et d'atterrissage, montée sur une surface de support (22), **caractérisée en ce qu'**elle est montée de manière amovible sur la surface de support (22), **en ce qu'**elle repose, s'accroche et/ou se suspend sur la surface de support (22), et **en ce qu'**elle comprend les éléments suivants :
- au moins deux éléments de réception (10, 11) prévus pour s'associer afin de former une surface de posé (12) de plus grande taille lorsqu'ils sont déployés ;
- au moins un moyen de protection (20) dans lequel l'ensemble des éléments de réception (10, 11) de l'aire de posé de l'invention peut être entièrement escamoté ;
- au moins un moyen technique mécanique d'escamotage (24) pour au moins un élément de réception,
lequel moyen réalise les mouvements d'au moins un des éléments de réception (10, 11) pour l'escamoter de la surface du support sur laquelle l'aire de posé (1) est montée et le loger dans le moyen de protection (20) ; et
- au moins un moyen technique mécanique d'extraction (26) et/ou de déploiement (25) pour au moins un élément de réception (10, 11), ce moyen d'extraction (26) réalisant les mouvements d'au moins un des éléments de réception (10, 11) pour le sortir hors du moyen de protection (20) dans lequel il se trouve à l'état escamoté et pour le déployer en position d'utilisation.

2. Aire de posé (1) selon la revendication 1, **caractérisée en ce qu'**elle comprend en outre au moins une armature de fixation et de soutien (13) supportant les éléments de réception (10, 11) une fois ceux-ci déployés afin que la surface de posé (12) soit sensiblement horizontale.

3. Aire de posé (1) selon la revendication 1, **caractérisée en ce qu'**elle est montée amovible sur la surface (22) du support (2) au moyen d'un système de liaison automatique par prise, connexion et/ou raccord rapide (31).

4. Aire de posé (1) selon la revendication 1, **caractérisée en ce que** la surface (22) du support (2) sur laquelle elle est montée est un bâtiment (3), une plate-forme pétrolière (4), un relief montagneux (5), un navire (6), un arbre (7), un véhicule (8), une structure (9) flottant sur l'eau ou tout autre type de véhicule, de terrain ou de structure naturelle ou artificielle.

5. Aire de posé (1) selon la revendication 1, **caractérisée en ce que** l'aire de posé (1) est montée en saillie sur la surface (22) du support (2) ou encastrée dans celle-ci, horizontale, latérale ou suspendue.

6. Aire de posé (1) selon la revendication 1 ou 2, **caractérisée en ce que** les différents moyens techniques mécaniques d'extraction (26), de déploiement (25) et/ou d'escamotage (24) sont électriques, magnétiques, aérauliques, pneumatiques, hydrauliques, hydropneumatiques, motorisés ou manuels.

7. Aire de posé (1) selon la revendication 1, **caractérisée en ce que** les différents moyens techniques mécaniques d'extraction (26), de déploiement (25) et/ou d'escamotage (24) comprennent au moins un bras mécanique, un mât de levage (30), un élévateur à ciseaux (28), un vérin (27), une pompe, une crémaillère, une chaîne, un câble ou analogue, **en ce que** chaque mât de levage hydraulique (30) est guidé horizontalement et verticalement par au moins un vérin hydraulique (27), et **en ce que** les différents moyens d'extraction (26), de déploiement (25) et/ou d'escamotage (24) comprennent au moins un disposi6f de guidage du type glissière, rail, porte-à-faux, appui, béquille, tréteau, système suspendu ou basculant, ou analogue.

8. Aire de posé (1) selon la revendication 1, **caractérisée en ce que** les mouvements réalisés par les moyens techniques mécaniques d'escamotage (24) sont des mouvements de pivotement centré, de pivotement décalé, de translation ou toute combinaison de ces mouvements.

9. Aire de posé (1) selon la revendication 1, **caractérisée en ce qu'**un moyen technique mécanique de déploiement (25) réalise les mouvements d'au moins un élément de réception (10, 11) pour le déployer sous forme de diaphragme, corolle, éventail, parapluie, plateau, rideaux, volets roulants, ou pour l'ouvrir en deux, en trois, en quatre volets ou plus.

10. Aire de posé (1) selon la revendication 1, **caractérisée en ce qu'**elle comprend en outre un moyen (32) permettant de faire pivoter la surface de posé (12).

11. Aire de posé (1) selon la revendication 1, **caractérisée en ce qu'**elle comprend en outre un système d'amortissement et un système de compensation des mouvements de la surface de support (22) sur lequel elle est montée, et **en ce que** le système de compensation des mouvements de la surface de support (22) comprend des vérins hydrauliques commandés pour éviter le tangage ou le roulis et/ou des amortisseurs, ou des systèmes antivibratoires.

12. Aire de posé (1) selon la revendication 1, **caractérisée en ce qu'**elle comprend en outre un système de contrôle du déploiement, de freinage du déploiement et/ou de maintien en position de l'aire de posé (1).

13. Aire de posé (1) selon la revendication 1, **caractérisée en ce qu'**elle comprend en outre un système permettant de joindre deux éléments de réception (10, 11) successifs.

14. Aire de posé (1) selon la revendication 1, **caractérisée en ce qu'**elle comprend en outre au moins un des éléments suivants :
- un réseau de distribution de liquide sous pression ou non (36) alimentant diverses prises de liquide (37) réparties sur la surface de posé (12) ;
- un réseau de distribution d'air sous pression ou non (38) alimentant diverses prises d'air (39) réparties sur la surface de posé (12) ;
- un réseau de distribution d'électricité (40) alimentant diverses prises d'électricité (41) réparties sur la surface de posé (12) ;
- un réseau anti-incendie (42) alimentant diverses buses anti-incendie (43) quadrillant la surface de posé (12) ;
- un réseau de distribution de carburant (44) ;
- une balise de navigation (45) équipée de repères émetteurs visuels, sonores, radio, ou analogues ;
- des points de fixation (41) qui permettent d'arrimer, d'ajouter, et/ou de connecter tout système permettant :
- de compléter et/ou de développer la surface de l'aire, en ajoutant des surfaces de posé (12), ou en juxtaposant deux aires de posé (12) ;
- de fixer, d'arrimer, de manière constante ou non tout objet, matériel, pour les transporter, les sécuriser, et/ou les utiliser ou les stocker ;
- de connecter et/ou de fixer tout matériel, objet, nécessitant d'être alimenté par l'aire de posé (1) et/ou fixé de manière constante ou non à celle-ci ;
- un système de dégivrage ou d'augmentation de température ;
- un système de génération ou de stockage d'énergie ;
- un système de climatisation chaud et/ou froid ; et
- un bras de manutention ou tout autre système de levage permettant de manipuler des éléments de masse élevée ;

15. Aire de posé (1) selon la revendication 1, **caractérisée en ce que** la surface de posé (12) comprend au moins un des éléments suivants :
- des perforations formant des logements ou tout autre moyen permettant de reconfigurer et d'aménager la surface de posé (12) pour lui donner une autre fonction ;
- des fixations formant un dispositif d'arrimage ;
- des moyens de connexion à divers réseaux multimédias ; et
- des balises de délimitation, de navigation et de signalisation ;
- un système anti-incendie (42) quadrillant toute la surface de posé (12) et incorporant un système de buses (43) projetant des substances extinctrices ;
- un réseau électrique (40) incorporant des prises (41) en surface pour alimenter tout appareil électrique ;
- un système d'air (38) et un système d'eau (36) sous pression, comprenant des buses de raccordement (37, 39) ;
- une arrivée de carburant sous pression (44) comprenant une ou plusieurs buses de raccordement ;
- un plancher technique modulaire (47) interchangeable antistatique, comprenant un système anti-givre ;
- un revêtement antiglisse (48) ;
- un système d'évacuation des liquides (49), comprenant des rigoles et des gouttières ;
- une connectique spécifique (50) permettant de relier d'autres surfaces de posé (12) ou aires de posé (1), afin de les relier mécaniquement et d'alimenter les différentes fonctionnalités précédemment citées ;
- des logements d'arrimage pour le stockage ; et
- une lettre H lumineuse (17) signalisant la surface de posé (12) aux aérodynes (15) et aérostats.

## Claims

1. A landing area (1) for air machines or vehicles, particularly vertical landing or short takeoff/landing devices, attached to a supporting surface (22), **characterized in that** it is removably attached to the supporting surface (22), **in that** it rests on, is attached to and/or is suspended from the supporting surface (22), and **in that** it comprises the following elements:
- at least two reception elements (10, 11) which will be connected in order to form a larger landing surface (12) when deployed;
- at least one protective means (20) inside of which all the reception elements (10, 11) of the landing area of the invention can be completely retracted;
- at least one technical mechanical retraction means (24) for at least one reception element, said means moving at least one of the reception elements (10, 11) to retract it from the support surface where the landing area (1) is attached and store it inside the protective means (20); and
- at least one technical mechanical extraction means (26) and/or deployment means (25) for at least one reception element (10, 11), said extraction means (26) moving at least one of the reception means (10, 11) to remove it from the protective means (20) where it was located while retracted and to deploy it into position for use.

2. A landing area (1) according to claim 1 **characterized in that** it further comprises at least one attachment and support armature (13) supporting the reception elements (10, 11) once they have been deployed in order for the landing surface (12) to be essentially horizontal.

3. A landing area (1) according to claim 1 **characterized in that** it is removably attached to the surface (22) of the support (2) by means of an automatic connecting system using a plug, connection and/or quick connector (31).

4. A landing area (1) according to claim 1 **characterized in that** the surface (22) of the support (2) which it is attached to is a building (3), an offshore oil drilling platform (4), mountainous terrain (5), a ship (6), a tree (7), a vehicle (8), a structure (9) floating on water or any other type of vehicle, terrain, or natural or artificial structure.

5. A landing area (1) according to claim 1 **characterized in that** the landing area (1) projects from the surface (22) of the support (2) or is embedded within it, horizontally, laterally, or suspended.

6. A landing area (1) according to claim 1 or 2 **characterized in that** the different technical mechanical means of extraction (26), deployment (25), and/or retraction (24) are electrical, magnetic, aerolic, pneumatic, hydraulic, hydropneumatic, motorized, or manual.

7. A landing area (1) according to claim 1 **characterized in that** the different technical mechanical means of extraction (26), deployment (25), and/or retraction (24) comprise at least a mechanical arm, a lift mast (30), a scissored lifting device (28), a cylinder (27), a pump, a rack, a chain, a cable, or similar element, **in that** each hydraulic lift masts (30) is guided horizontally and vertically by at least one hydraulic cylinder (27), and **in that** the different means of extraction (26), deployment (25), and/or retraction (24) comprise hydraulic at least one guide device such as a glider, rail, overhang, trestle, contact, stand, a suspended or tilting device, or similar element.

8. A landing area (1) according to claim 1 **characterized in that** the movement produced by the technical mechanical retraction means (24) consists of centered pivoting, offset pivoting, translation, and/or any combination of these movements.

9. A landing area (1) according to claim 1 **characterized in that** a technical mechanical deployment means (25) moves at least one reception element (10, 11) in order to deploy it in the form of a diaphragm, corolla, fan, umbrella, platform, shutter, flaps, rolling shutters, or to open it into two, three, or four or more flap segments.

10. A landing area (1) according to claim 1 **characterized in that** it further comprises a means (32) of pivoting the landing surface (12).

11. A landing area (1) according to claim 1 **characterized in that** it further comprises a shock absorbing system and a motion compensation system for the support surface (22) to which it is attached, and **in that** the motion compensation system for the support surface (22) comprises hydraulic cylinders regulated to eliminate pitching or rolling, and/or shock absorbers or anti-vibratory systems.

12. A landing area (1) according to claim 1 **characterized in that** it further comprises a system for controlling deployment, halting deployment, and/or for maintaining landing area (1) in position.

13. A landing area (1) according to claim 1 **characterized in that** it further comprises a system for joining two successive reception elements (10, 11).

14. A landing area (1) according to claim 1 **characterized in that** it further comprises at least one of the following elements :
- a network for distribution of pressurized or non-pressurized liquid (36) supplying various liquid nozzles (37) distributed over the landing surface (12);
- a network for distribution of pressurized or non-pressurized air (38) supplying various air outlets (30) distributed over the landing surface (12); an electrical distribution network (40) supplying various electrical outlets (41) distributed over the landing surface (12);
- a fire prevention network (42) supplying various fire prevention nozzles (43) covering the landing surface (12);
- a fuel distribution network (44);
- a navigation beacon (45) equipped with visual, auditory, and radio signals or the like;
- attachment points (41) for fastening, adding, and/or connecting any system allowing:
• the landing surface to be completed and/or developed by adding landing surfaces (12) or by juxtaposing two landing areas (12);
• the attachment or fastening, either permanently or not, any object or material in order to transport, secure and/or utilize or store them;
• the connection and/or attachment of any material or object that must be supplied by the landing area(1) and/or fixed either permanently or not to it ;
- a de-icing or temperature raising system;
- an energy generating or storage system;
- a cold or hot air temperature control system; and
- a manipulating arm or other lifting system for manipulating objects of high mass.

15. A landing area (1) according to claim 1 **characterized in that** the landing surface (12) comprises at least one of the following elements :
- perforations forming housings or some other means of reconfiguring and arranging the landing surface (12) to give it another function; attachments forming a connecting device;
- a means of connection to various multimedia networks; beacons for demarcation, navigation, and signaling;
- a fire-prevention system (42) covering the entire landing surface (12) and incorporating a system of nozzles (43) projecting fire extinguishing substances;
- an electrical network (40) incorporating surface outlets (41) to supply any electrical apparatus;
- a pressurized air system (38) and a pressurized water system (36) comprising connecting nozzles (37, 39);
- a pressurized fuel inlet (44) comprising one or more connecting nozzles;
- a technical, interchangeable, antistatic modular floor (47) that is and comprises an anti-ice system;
- an anti-skid coating (48);
- a liquid evacuation system (49) comprising channels and gutters;
- a specific connector (50) for connecting other landing surfaces (12) or landing areas (1) in order to join them mechanically and fulfill the different functions previously cited;
- connecting housings for storage; and
- a lighted letter "H" (17) signaling the location of the landing surface (12) to aerodynes (15) and aerostats.

## Patentansprüche

1. Landebereich (1) für Fluggeräte und Luftfahrzeuge, insbesondere vom Typ mit senkrechter Landung oder mit kurzer Abflug - und Landungsstrecke, montiert auf einer Tragfläche (22), **dadurch gekennzeichnet, dass** er abnehmbar an der Tragfläche (22) montiert ist, dass er auf der Tragfläche (22) ruht, in sie eingehakt und/oder an ihr aufgehängt wird, und dass er die folgenden Elemente umfasst:
- mindestens zwei Aufnahmeelemente (10, 11), die zusammengefügt werden sollen, um eine größere Landefläche (12) zu bilden, wenn sie ausgeklappt sind;
- mindestens ein Schutzmittel (20), in das sämtliche Aufnahmeelemente (10, 11) des Landebereichs der Erfindung komplett einzogen werden können;
- mindestens ein technisches mechanisches Einzugsmittel (24) für mindestens ein Aufnahmeelement,
wobei dieses Mittel die Bewegungen mindestens eines der Aufnahmeelemente (10, 11) gewährleistet, um es aus der Tragfläche zu ziehen, auf der der Landebereich (1) montiert ist, und es im Schutzmittel (20) unterzubringen; und
- mindestens ein technisches mechanisches Auszugs- (26) und/ oder Ausklappmittel (25) für mindestens ein Aufnahmeelement (10, 11), wobei dieses Auszugsmittel (26) die Bewegungen mindestens eines der Aufnahmeelemente (10, 11) gewährleistet, um es aus dem Schutzmittel (20) zu ziehen, in dem es sich im eingezogenen Zustand befindet, und es in die Benutzungsposition auszuklappen.

2. Landebereich (1) gemäß Anspruch 1, **dadurch gekennzeichnet, dass** er ferner mindestens eine Befestigungs- und Stützarmatur (13) umfasst, die die Aufnahmeelemente (10, 11) nach ihrem Ausklappen stützt, damit sich die Landefläche (12) in etwa waagerechter Position befindet.

3. Landebereich (1) gemäß Anspruch 1, **dadurch gekennzeichnet, dass** er abnehmbar an der Fläche (22) des Trägers (2) montiert ist, und zwar anhand eines automatischen Verbindungssystems per Kupplungsstück, Anschluss und/oder Schnellverbinder (31).

4. Landebereich (1) gemäß Anspruch 1, **dadurch gekennzeichnet, dass** die Fläche (22) des Trägers (2), an dem er montiert ist, ein Gebäude (3), eine Ölplattform (4), ein Gebirgsrelief (5), ein Schiff (6), ein Baum (7), ein Fahrzeug (8), eine auf dem Wasser schwimmende Struktur (9), ein anderer natürlicher oder künstlicher Strukturtyp oder ein anderer Fahrzeug- oder Terraintyp ist.

5. Landebereich (1) gemäß Anspruch 1, **dadurch gekennzeichnet, dass** der Landebereich (1) auskragend an der Fläche (22) des Trägers (2) montiert oder in diese waagerecht, lateral oder hängend eingefügt ist.

6. Landebereich (1) gemäß Anspruch 1 oder 2, **dadurch gekennzeichnet, dass** die verschiedenen technischen mechanischen Auszugs- (26), Ausklapp- (25) und/oder Einzugsmittel (24) elektrisch, magnetisch, lufttechnisch, pneumatisch, hydraulisch, hydropneumatisch, motorisiert oder manuell sind.

7. Landebereich (1) gemäß Anspruch 1, **dadurch gekennzeichnet, dass** die verschiedenen technischen mechanischen Auszugs- (26), Ausklapp- (25) und/oder Einzugsmittel (24) mindestens einen mechanischen Arm, einen Hubmast (30), eine Scherenhebebühne (28), einen Zylinder (27), eine Pumpe, eine Zahnstange, eine Kette, ein Seil oder dergleichen umfassen, dass jeder hydraulische Hubmast (30) waagerecht und senkrecht von mindestens einem Hydraulikzylinder (27) geführt wird, und dass die verschiedenen Auszugs- (26), Ausklapp- (25) und/oder Einzugsmittel (24) mindestens eine Führungsvorrichtung vom Typ Gleitschiene, Schiene, Überhang, Abstützung, Stütze, Bock, Hänge - oder Kippsystem oder dergleichen umfassen.

8. Landebereich (1) gemäß Anspruch 1, **dadurch gekennzeichnet, dass** die von den technischen mechanischen Einzugsmitteln (24) gewährleisteten Bewegungen zentrierte Schwenkbewegungen, versetzte Schwenkbewegungen, Übergangsbewegungen oder eine Kombination dieser Bewegungen sind.

9. Landebereich (1) gemäß Anspruch 1, **dadurch gekennzeichnet, dass** ein technisches mechanisches Ausklappmittel (25) die Bewegungen mindestens eines Aufnahmeelements (10, 11) gewährleistet, um es in Form eines Diaphragmas, einer Krone, eines Fächers, eines Regenschirms, einer Platte, eines Vorhangs, eines Rollladens auszuklappen, oder es in zwei, drei, vier oder mehr Teile zu öffnen.

10. Landebereich (1) gemäß Anspruch 1, **dadurch gekennzeichnet, dass** er ferner ein Mittel (32) zum Verschwenken der Landefläche (12) umfasst.

11. Landebereich (1) gemäß Anspruch 1, **dadurch gekennzeichnet, dass** er ferner ein Dämpfungssystem und ein Ausgleichssystem der Bewegungen der Tragfläche (22) umfasst, an der er montiert ist, und dass das Ausgleichssystem der Bewegungen der Tragfläche (22) Dämpfer oder Antivibrationssysteme und/oder angesteuerte Hydraulikzylinder umfasst, um das Nicken oder das Rollen zu vermeiden.

12. Landebereich (1) gemäß Anspruch 1, **dadurch gekennzeichnet, dass** er ferner ein Kontrollsystem für das Ausklappen, das Abbremsen des Ausklappens und/oder das Stellungshalten des Landebereichs (1) umfasst.

13. Landebereich (1) gemäß Anspruch 1, **dadurch gekennzeichnet, dass** er ferner ein System umfasst, um zwei aufeinanderfolgende Aufnahmeelemente (10, 11) zu verbinden.

14. Landebereich (1) gemäß Anspruch 1, **dadurch gekennzeichnet, dass** er ferner mindestens eins der folgenden Elemente umfasst:
- ein Verteilungsnetz von Flüssigkeit, die unter Druck steht oder nicht (36), das verschiedene Flüssigkeitsverbraucher (37) versorgt, die über die Landefläche (12) verteilt sind;
- ein Verteilungsnetz von Luft, die unter Druck steht oder nicht (38), das verschiedene Luftverbraucher (39) versorgt, die über die Landefläche(12) verteilt sind;
- ein Stromverteilungsnetz (40), das verschiedene Stromverbraucher (41) versorgt, die über die Landefläche (12) verteilt sind;
- ein Feuerschutznetz (42), das verschiedene Feuerschutzdüsen (43) versorgt, die gitterartig über die Landefläche (12) verteilt sind;
- ein Kraftstoffverteilungsnetz (44);
- eine Navigationsbake (45), ausgestattet mit visuellen, akustischen, Funk-Sendemarkierungen oder dergleichen;
- Befestigungspunkte (41) zum Befestigen, Hinzufügen und/oder Anschließen eines Systems, das ermöglicht:
- durch Hinzufügen von Landeflächen (12) oder durch Aneinanderlegen zweier Landeflächen (12) die Fläche des Bereichs zu ergänzen und/oder zu entwickeln;
- ein Objekt oder Material konstant oder nicht zu befestigen, um es zu transportieren, zu sichern und/oder zu benutzen oder zu lagern;
- ein Material oder Objekt anzuschließen und/oder zu befestigen, das über den Landebereich (1) versorgt werden muss, und/oder es konstant oder nicht an diesem zu befestigen;
- ein Enteisungs- oder Temperaturerhöhungssystem;
- ein Energieerzeugungs- oder Energiespeichersystem;
- ein Kalt- und/oder Warmklimatisierungssystem;
- einen Förderarm oder ein anderes Hubsystem zum Bewegen der schweren Elemente.

15. Landebereich (1) gemäß Anspruch 1, **dadurch gekennzeichnet, dass** die Landefläche (12) mindestens eins der folgenden Elemente umfasst:
- Perforationen, die Aufnahmen bilden, oder andere Mittel die es ermöglichen, die Landefläche (12) neu zu konfigurieren oder einzurichten, um ihr eine andere Funktion zu verleihen;
- Befestigungen, die eine Befestigungsvorrichtung bilden;
- Anschlussmittel an diverse Multimediennetze; und
- Begrenzungs-, Navigations- und Anzeigebaken;
- ein Feuerschutzsystem (42), das sich gitterartig über die gesamte Landefläche (12) verteilt und ein Düsensystem (43) beinhaltet, das Löschsubstanzen versprüht;
- ein Stromnetz (40) mit Anschlüssen (41) an der Fläche, um elektrische Geräte zu versorgen;
- ein Luftsystem (38) und ein Druckwassersystem (36) mit Anschlussdüsen (37, 39);
- ein Kraftstoffeinlass unter Druck (44) mit einer oder mehreren Anschlussdüsen;
- einen antistatischen, austauschbaren, modularen Technikboden (47) mit einem Enteisungssystem;
- eine Antirutschbeschichtung (48);
- ein Flüssigkeitsableitungssystem (49) mit Rinnen und Kanälen;
- einen spezifischen Anschluss (50) zum Anschließen anderer Landeflächen (12) oder Landebereiche (1), um sie mechanisch zu verbinden und die verschiedenen obengenannten Funktionalitäten zu versorgen;
- Befestigungsaufnahmen für die Lagerung; und
- einen Leuchtbuchstaben H (17), der die Landefläche (12) für Luftfahrzeuge schwerer als Luft (15) und Luftfahrzeuge leichter als Luft kenntlich macht.
